# FASCICULE DE BREVET EUROPEEN

(11) **EP 2 686 597 B1**
(45) Date de publication et mention de la délivrance du brevet: **21.01.2015**
(21) Numéro de dépôt: 12713224.9
(22) Date de dépôt: 12.03.2012
(51) Int. Cl.: F16L 23/08, F16L 33/04

(54) **COLLIER DE SERRAGE SERRE PAR UNE TIGE FILETEE ET DEUX ECROUS**
DURCH EINE GEWINDESTANGE UND ZWEI MUTTERN GESPANNTER KLEMMRING
CLAMPING COLLAR TIGHTENED BY A THREADED ROD AND TWO NUTS

(30) Priorité: 18.03.2011 FR 1152239
(43) Date de publication de la demande: 22.01.2014
(73) Titulaire: Etablissements Caillau, 92130 Issy-les-Moulineaux (FR)
(72) Inventeur: RIGOLLET, Nicolas, F-41200 Romorantin (FR); PREVOT, Fabrice, F-41130 Selles Sur Cher (FR)
(74) Mandataire: Intès, Didier Gérard André
(86) Numéro de dépôt international: PCT/FR2012/050510
(87) Numéro de publication internationale: WO 2012/127149

(56) Documents cités:
- EP-A1- 0 088 507
- WO-A1-2004/008015
- US-A- 2 352 372

## Description

La présente invention concerne un collier de serrage comprenant une ceinture portant une première et une deuxième oreille de serrage, une tige de serrage filetée, et un premier et un deuxième écrou qui coopèrent respectivement avec la première et la deuxième oreille et sont aptes à respectivement coopérer par vissage avec la tige de serrage pour rapprocher les oreilles l'une de l'autre de manière à serrer le collier.

Des colliers de ce type sont connus, par exemple par les documents EP 0088 507 et GB 2804 (GB 191102804).

Pour serrer ces colliers, il faut visser chacun des deux écrous sur la tige de serrage, respectivement à partir de la première et de la deuxième extrémité de cette dernière. Ainsi, l'opération de serrage est fastidieuse, car elle nécessite de manipuler les deux écrous pour les serrer tous les deux sur la tige de serrage filetée. Au final, deux portions d'extrémité de la tige, de longueurs sensiblement égales, s'étendent de part et d'autre des oreilles.

Il existe des colliers dans lesquels le serrage à l'aide d'une tige de serrage filetée est simplifié. Pour ces colliers, la tige de serrage filetée est une vis dont la tête est fixe par rapport à une oreille, de sorte que c'est soit la tête de la vis, soit l'écrou qui coopère avec l'autre oreille, qui doit être manipulé par vissage pour réaliser le serrage. C'est par exemple ce que montre le document EP 0 305 232. Si le serrage est effectivement simplifié, ces solutions présentent des problèmes en termes d'encombrement. En effet, à l'issue du serrage, la tête de la vis est située contre une oreille tandis que l'écrou est situé contre l'autre oreille et que toute la portion de vis sur laquelle s'est déplacé l'écrou s'étend au-delà de l'oreille avec laquelle coopère cet écrou. Cette portion peut être longue puisque, pour pouvoir monter le collier sur l'objet devant être serré, il faut qu'il ait initialement un diamètre important, ce qui suppose que la longueur de tige est relativement conséquente.

En résumé, dans les solutions existantes, il faut ou bien manipuler deux écrous, ce qui est fastidieux, ou bien accepter un encombrement important lié au fait que la longueur de vissage de la vis se trouve d'un seul côté d'une oreille.

La présente invention vise à améliorer cet état de la technique, en proposant une solution qui permette à la fois de simplifier l'opération de serrage et d'éviter un encombrement excessif.

Ce but est atteint grâce au fait que le deuxième écrou est calé en rotation par rapport à la deuxième oreille et au fait que la tige de serrage présente un premier et un deuxième filetage de même sens, qui coopèrent respectivement avec le premier et avec le deuxième écrou, de telle sorte que l'entraînement du premier écrou dans le sens de son vissage provoque successivement le vissage de ce premier écrou sur le premier filetage, l'arrêt du premier écrou à la fin du premier filetage et l'entraînement de la tige de serrage vissant cette dernière dans le deuxième écrou.

On comprend que, grâce à ces dispositions, il suffit de manipuler le premier écrou pour réaliser le serrage. En effet, l'entraînement du premier écrou dans le sens de son vissage l'amène dans sa position finale sur la tige de serrage filetée (à la fin du premier filetage), dans laquelle il joue le rôle d'une tête de vis puisque, lorsqu'il est davantage entraîné en rotation sans le même sens à partir de ce stade, il fait tourner avec lui la tige de serrage. Le deuxième écrou étant calé en rotation par rapport à la deuxième oreille, cet entraînement de la tige de serrage filetée provoqué par la rotation du premier écrou, permet de visser le deuxième filetage de la tige de serrage dans le deuxième écrou.

Ainsi, le serrage est réalisé en entraînant un seul écrou en rotation. De plus, au final, deux portions de la tige de serrage correspondant respectivement au premier et au deuxième filetage s'étendent de part et d'autre des oreilles, ce qui permet de limiter l'encombrement. En outre, les deux oreilles peuvent être rapprochées l'une de l'autre jusqu'à la position voulue, cette position étant déterminée, pour le premier écrou, par son arrivée en fin de course à la fin du premier filetage et, pour le deuxième écrou, par le fait que le couple de serrage souhaité a été atteint et/ou par l'arrivée de la fin du deuxième filetage au contact avec ce deuxième écrou.

Les premier et deuxième filetages peuvent être réalisés dans la continuité l'un de l'autre. Ils peuvent même être deux tronçons opposés d'un même filetage, la fin du premier filetage étant alors définie par tout moyen approprié, par exemple par un écrasement local des filets ou par un circlips.

Toutefois, avantageusement, les premier et deuxième filetages sont séparés par une portion non filetée.

Cette portion non filetée délimite la fin du premier filetage et bloque le premier écrou à la fin de la course de ce dernier. Par ailleurs, elle forme un repère visuel pour monter correctement la tige de serrage lors de l'assemblage des différentes pièces.

On a indiqué précédemment que le deuxième écrou est calé en rotation par rapport à la deuxième oreille. Le deuxième écrou peut être une pièce distincte de la deuxième oreille et être calé en rotation du fait de son montage par rapport à cette oreille. Par exemple, le deuxième écrou et la deuxième oreille (ou une portion du collier adjacente à cette deuxième oreille) peuvent avoir des formes complémentaires permettant un tel calage en rotation dès lors que le deuxième écrou est monté. Il est également possible que le deuxième écrou soit réalisé en une seule pièce avec la deuxième oreille, ainsi qu'on le verra dans la suite. Le deuxième écrou est donc une partie du collier, formant une pièce autonome ou formant au contraire une seule pièce avec la deuxième oreille, qui est taraudée pour coopérer par vissage avec le deuxième filetage de la tige de serrage filetée.

Avantageusement, le collier comporte, en outre, une entretoise située entre la première oreille et le premier écrou.

Cette entretoise permet de maintenir le premier écrou à la distance souhaitée par rapport à la première oreille. Ceci permet d'entraîner le premier écrou en rotation pour assurer le serrage du collier, sans gêne par rapport à la première oreille.

L'invention sera bien comprise et ses avantages apparaîtront mieux à la lecture de la description détaillée qui suit, d'un mode de réalisation représenté sur l'exemple non limitatif. La description se réfère aux dessins annexés sur lesquels :
- la figure 1 est une vue en perspective d'un collier de serrage conforme à l'invention, à l'état non serré ;
- la figure 2 montre, en vue de côté, le collier de la figure 1, à l'état non serré ;
- la figure 3 est également une vue de côté, prise comme celle de la figure 2, mais qui montrant un état intermédiaire de serrage, dans lequel le premier écrou est arrivé à la fin du premier filetage ;
- la figure 4 montre, toujours en vue de côté, le collier en fin de serrage, alors que la tige de serrage filetée a été vissée dans le deuxième écrou ; et
- la figure 5 montre une variante pour le deuxième écrou.

Le collier représenté sur les figures comprend une ceinture 10, en particulier une ceinture métallique, avec une première oreille 12 et une deuxième oreille 14 qui sont redressées sensiblement radialement par rapport à la ceinture, celle-ci étant enroulée sur elle-même autour de l'axe A du collier.

Le collier comporte également une tige de serrage filetée 16, un premier écrou 18 qui coopère avec la première oreille 12 et un deuxième écrou 20 qui coopère avec la deuxième oreille 14. La tige de serrage filetée traverse des perçages des oreilles 12 et 14, de sorte que ses deux extrémités opposées 16A et 16B sont situées de part et d'autre des oreilles.

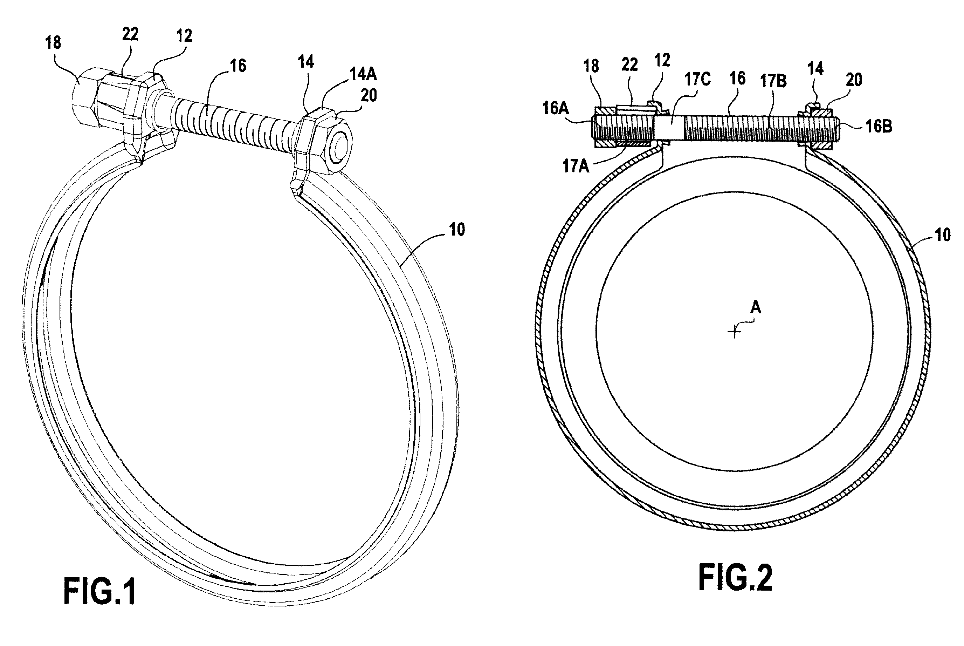

Au sens de ce qui précède, le terme "coopère" signifie que lorsque les écrous 18 et 20 et la tige de serrage filetée 16 sont déplacés les uns par rapport aux autres dans le sens du vissage des écrous sur la tige, il se produit une réaction des écrous sur les oreilles qui tend à rapprocher ces oreilles l'une de l'autre de manière à serrer le collier. En l'espèce, sur la figure 1, le deuxième écrou 20 est directement en appui sur la deuxième oreille 14. Le premier écrou 18 coopère avec la première oreille 12 par l'intermédiaire d'une entretoise 22 qui maintient le premier écrou 18 à distance de la première oreille 12. Par exemple, cette entretoise peut être réalisée conformément au brevet EP 1 540 229.

Dans l'exemple représenté, la ceinture 10 présente une section creuse. Elle est particulièrement adaptée à serrer l'une contre l'autre les extrémités de deux tubes, situées en regard l'une de l'autre et présentant des évasés qui s'insèrent dans le creux de la ceinture. Toutefois, il doit être entendu que l'invention peut tout aussi bien s'appliquer à des colliers dont les ceintures ont d'autres formes, en particulier des ceintures à section plate. Il peut même s'agir de ceintures à section concave, dont la cavité est située du côté extérieur, c'est-à-dire à l'envers par rapport à ce que montre la figure 1.

Comme on le voit mieux sur les figures 2 à 4, la tige de serrage 16 présente un premier filetage 17A, qui s'étend à la première extrémité 16A de la tige et avec lequel coopère le premier écrou 18, ainsi qu'un deuxième filetage 17B, qui est situé du côté de la deuxième extrémité 16B de la tige et avec lequel coopère le deuxième écrou 20.

On voit sur ces figures que les premier et deuxième filetages sont de même sens. En l'espèce, les deux filetages 17A et 17B sont du type "pas à droite" ce qui signifie que l'écrou 18 est vissé sur le premier filetage 17A en étant entraîné en rotation vers la droite et que le deuxième filetage est vissé dans le deuxième écrou 20 par un entraînement en rotation de la tige de serrage 16 également vers la droite.

Bien entendu, la disposition pourrait être inversée, puisqu'on pourrait choisir que les filetages 17A et 17B aient un pas à gauche. Ceci étant, l'orientation représentée sur le dessin est avantageuse. En effet, le sens d'entraînement d'un écrou vers la droite sur une tige filetée est naturellement le sens du vissage de cet écrou. De même, l'entraînement d'une vis en rotation vers la droite est le sens naturel de son vissage. Ainsi, avec cette disposition, le collier est serré par un mouvement continu de vissage classique, vers la droite, opéré sur le premier écrou.

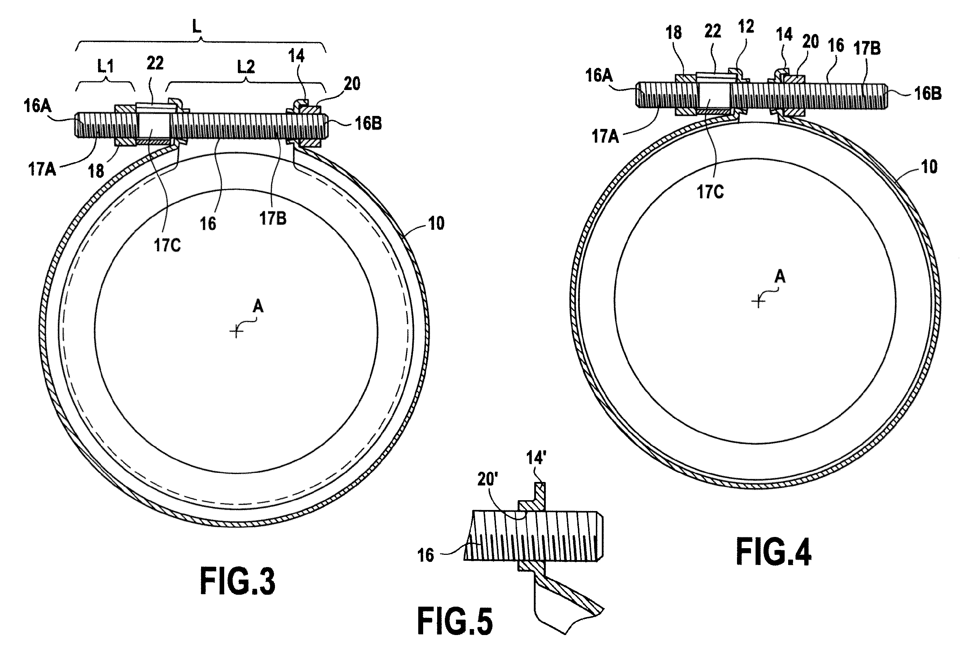

Plus précisément, pour serrer le collier selon l'invention, on entraîne d'abord le premier écrou 18 dans le sens dans son vissage sur le premier filetage 16. A l'issue de ce vissage, le premier écrou 18 parvient en bout de course et s'arrête à la fin du premier filetage 17A située vers l'extrémité 16B de la tige de serrage filetée. C'est la situation que montre la figure 3. Dans cette situation, il n'y a toujours pas eu de déplacement relatif entre la tige de serrage 16 et le deuxième écrou 20. Cependant, à partir du moment où le premier écrou 18 est arrivé en fin de course à la fin du premier filetage 17A, le fait de continuer à entraîner ce premier écrou 18 dans le sens de son vissage fait que l'ensemble tige de serrage + premier écrou se comporte comme une vis de serrage. En d'autres termes, à partir de ce moment, la rotation du premier écrou 18 entraîne avec elle la rotation, dans le même sens, de la tige de serrage filetée 16.

En conséquence, le deuxième écrou 20 étant calé en rotation par rapport à la deuxième oreille 14 du collier, ceci entraîne le vissage de la tige de serrage filetée 16 dans ce deuxième écrou 20. Comme on le voit sur la figure 4, ce vissage ramène les deux oreilles 12, 14 l'une vers l'autre et le collier peut ainsi être serré. On remarque sur la figure 4 que, en situation serrée du collier, les deux extrémités opposées de la tige dépassent respectivement de la première et de la deuxième oreille. En d'autres termes, la tige est équilibrée de part et d'autre des deux oreilles sans constituer une source d'encombrement d'un seul côté de celle-ci, sur une portée plus longue.

Le deuxième écrou 20 est calé en rotation par rapport à la deuxième oreille 14 dès son montage sur le collier. Par exemple, ce deuxième écrou peut avoir un ou plusieurs méplats (il peut s'agir d'un écrou classique de type "à six pans"), et l'oreille 14 comporte un rabat 14A qui vient coiffer au moins certains de ces méplats de manière à caler le deuxième écrou en rotation par rapport à l'oreille 14. Bien entendu, d'autres moyens de calage en rotation sont envisageables, par exemple, comme dans le brevet EP 0 305 232 qui divulgue un écrou ayant une encoche qui s'adapte à la forme extérieure de la ceinture du collier.

On peut également prévoir, comme le montre la figure 5, que le deuxième écrou 20' soit formé en une seule pièce avec la deuxième oreille 14' du collier. Par exemple, le perçage de cette deuxième oreille que traverse la tige de serrage 16 peut présenter un collet axial (c'est-à-dire dirigé parallèlement à l'axe de la tige) taraudé en son intérieur. Par exemple, ce collet peut être formé par repoussement de matière lors de la formation du perçage de l'oreille 14 et être taraudé en reprise.

Toutefois, dans l'exemple représenté sur les figures 1 à 4, les perçages des oreilles 12 et 14 qui sont traversés par la vis sont bordés par des collets légèrement évasés vers l'intérieur (c'est-à-dire dans le sens allant de l'un vers l'autre), de manière à rendre possible un léger débattement angulaire relatif entre la tige de serrage et les oreilles, ce qui facilite le redressement des oreilles qui s'opère lors de la réduction du diamètre du coller dû au serrage.

Comme on l'a indiqué précédemment, le premier écrou 18 coopère avec la première oreille 12 par l'intermédiaire d'une entretoise 22. Cette entretoise sert à maintenir le premier écrou à distance de l'oreille, de manière à faciliter l'accès à ce premier écrou pour un outil de serrage, qui peut l'entourer pour venir en prise avec lui sur tout son pourtour.

Comme on le voit sur les figures, les premier et deuxième filetages 17A et 17B sont séparés par une portion non filetée 17C de la tige de serrage. La fin du premier filetage 17A à laquelle s'arrête le premier écrou en bout de course est déterminée par l'extrémité de la portion non filetée 17C qui se trouve du côté de l'extrémité 16A de la tige. Comme on le voit sur la figure 4, cette portion non filetée se trouve à l'intérieur de l'entretoise 22 lorsque le collier est serré, de sorte qu'elle ne contribue aucunement au serrage. En ménageant cette distance entre les extrémités en regard des premier et deuxième filetages 17A et 17B, on s'assure non seulement de la présence d'un repère visuel pour permettre de monter la tige 16 dans le bon sens, mais également de celle d'une zone tampon entre les deux filetages qui en facilite la fabrication.

Sur la figure 3, on a repéré les longueurs L1 du premier filetage 17A, L2 du deuxième filetage 17B et L de la tige de serrage 16. La longueur L1 est avantageusement comprise entre le cinquième et la moitié de la longueur L. Ainsi, en tenant compte également de la présence de l'entretoise, on fait en sorte que, lorsque le collier est serré, la partie de la tige qui se trouve entre les deux oreilles 14 et 16 soit la partie médiane de cette tige. La longueur L1 est celle sur laquelle s'étend le premier filetage à partir de la première extrémité de la tige, tandis que la longueur L2 est celle sur laquelle s'étend le deuxième filetage à partir de la deuxième extrémité de la tige.

Il est avantageux que les deux filetages aient le même pas, c'est-à-dire que l'espacement entre deux filets consécutifs soit le même pour les deux filetages. Ainsi, la vitesse de rapprochement des oreilles en fonction de la vitesse de rotation de l'outil de serrage qui entraîne d'abord le premier écrou 18 puis l'ensemble tige de serrage + premier écrou est sensiblement constante. On pourrait bien entendu toutefois choisir que le deuxième filetage 17B ait un pas différent de celui du premier filetage.

## Revendications

1. Collier de serrage comprenant une ceinture (10) portant une première et une deuxième oreille de serrage (12, 14 ; 14'), une tige de serrage filetée (16), et un premier et un deuxième écrou (18, 20 ; 20') qui coopèrent respectivement avec la première et la deuxième oreille et sont aptes à respectivement coopérer par vissage avec la tige de serrage (16) pour rapprocher les oreilles l'une de l'autre de manière à serrer le collier,
**caractérisé en ce que** le deuxième écrou est calé en rotation par rapport à la deuxième oreille et **en ce que** la tige de serrage (16) présente un premier et un deuxième filetage (17A, 17B) de même sens, qui coopèrent respectivement avec le premier et avec le deuxième écrou (18, 20 ; 20') de telle sorte que l'entraînement du premier écrou (18) dans le sens de son vissage provoque successivement le vissage de ce premier écrou sur le premier filetage (17A), l'arrêt du premier écrou à la fin du premier filetage et l'entraînement de la tige de serrage (16) vissant cette dernière dans le deuxième écrou (20, 20').

2. Collier de serrage selon la revendication 1, **caractérisé en ce que** les premier et deuxième filetages (17A, 17B) sont séparés par une portion non filetée (17C).

3. Collier de serrage selon la revendication 1 ou 2, **caractérisé en ce que** le deuxième écrou (20') est formé en une pièce avec la deuxième oreille (14').

4. Collier de serrage selon l'une quelconque des revendications 1 à 3, **caractérisé en ce que** le premier filetage (17A) s'étend, à partir de la première extrémité de la tige de serrage (16), sur une longueur (L1) comprise entre le cinquième et la moitié de la longueur (L) de la tige de serrage (16).

5. Collier de serrage selon l'une quelconque des revendications 1 à 4, **caractérisé en ce qu'**il comporte, en outre, une entretoise (22) située entre la première oreille (12) et le premier écrou (18).

6. Collier de serrage selon l'une quelconque des revendications 1 à 5, **caractérisé en ce que** les deux filetages (17A, 17B) ont le même pas.

## Patentansprüche

1. Klemmschelle, umfassend einen Ring (10), der eine erste und eine zweite Klemmöse (12, 14; 14') trägt, einen Gewindeklemmstift (16) sowie eine erste und eine zweite Mutter (18, 20; 20'), die mit der ersten bzw. der zweiten Öse zusammenwirken und geeignet sind, mit dem Klemmstift (16) jeweils schraubend zusammenzuwirken, um die Ösen einander zu nähern, so dass die Schelle festgezogen wird,
**dadurch gekennzeichnet, dass** die zweite Mutter gegenüber der zweiten Öse gegen ein Drehen festgelegt ist und dass der Klemmstift (16) ein erstes und ein zweites Gewinde (17A, 17B) mit gleicher Richtung aufweist, die mit der ersten bzw. mit der zweiten Mutter (18, 20; 20') derart zusammenwirken, dass das Antreiben der ersten Mutter (18) in Richtung ihres Festschraubens nacheinander das Aufschrauben dieser ersten Mutter auf das erste Gewinde (17A), das Anhalten der ersten Mutter am Ende des ersten Gewindes und das Antreiben des Klemmstiftes (16), das letzteren in die zweite Mutter (20, 20') schraubt, bewirkt.

2. Klemmschelle nach Anspruch 1, **dadurch gekennzeichnet, dass** das erste und das zweite Gewinde (17A, 17B) durch einen nicht gewindeten Abschnitt (17C) getrennt sind.

3. Klemmschelle nach Anspruch 1 oder 2, **dadurch gekennzeichnet, dass** die zweite Mutter (20') mit der zweiten Öse (14') einstückig ausgebildet ist.

4. Klemmschelle nach einem der Ansprüche 1 bis 3, **dadurch gekennzeichnet, dass** das erste Gewinde (17A) sich ausgehend von dem ersten Ende des Klemmstiftes (16) über eine Länge (L1), die zwischen dem Fünftel und der Hälfte der Länge (L) des Klemmstiftes (16) beträgt, erstreckt.

5. Klemmschelle nach einem der Ansprüche 1 bis 4, **dadurch gekennzeichnet, dass** sie ferner einen zwischen der ersten Öse (12) und der ersten Mutter (18) befindlichen Steg (22) umfasst.

6. Klemmschelle nach einem der Ansprüche 1 bis 5, **dadurch gekennzeichnet, dass** die beiden Gewinde (17A, 17B) die gleiche Steigung aufweisen.

## Claims

1. A clamping collar comprising a belt (10) carrying first and second tightening lugs (12, 14; 14'), a threaded tightening rod (16), first and second nuts (18, 20; 20') that co-operate respectively with the first lug and with the second lug and are suitable for co-operating respectively by screw engagement with the tightening rod (16) so as to bring the lugs towards each other in such a manner as to tighten the collar;
said clamping collar being **characterized in that** the second nut is retained so that it is prevented from moving in rotation relative to the second lug and **in that** the tightening rod (16) has first and second threads (17A, 17B) of the same direction that co-operate respectively with the first nut and with the second nut (18, 20; 20') in such a manner that driving the first nut (18) in its screwing direction successively causes said first nut to be screwed onto the first thread (17A), the first nut to be stopped at the end of the first thread and the tightening rod (16) to be driven, thereby screwing said tightening rod into the second nut (20, 20').

2. A clamping collar according to claim 1, **characterized in that** the first and second threads (17A, 17B) are separated by a non-threaded portion (17C).

3. A clamping collar according to claim 1 or claim 2, **characterized in that** the second nut (20') is formed in one piece with the second lug (14').

4. A clamping collar according to any one of claims 1 to 3, **characterized in that** the first thread (17A) extends from the first end of the tightening rod (16), over a length (L1) lying in the range one fifth of the length (L) of the tightening rod (16) to one half of said length (L).

5. A clamping collar according to any one of claims 1 to 4, **characterized in that** it further comprises a spacer (22) situated between the first lug (12) and the first nut (18).

6. A clamping collar according to any one of claims 1 to 5, **characterized in that** the two threads (17A, 17B) have the same pitch.
